# EUROPÄISCHE PATENTANMELDUNG

(11) **EP 2 730 780 A1**
(43) Veröffentlichungstag der Anmeldung: **14.05.2014**
(21) Anmeldenummer: 13189981.7
(22) Anmeldetag: 24.10.2013
(51) Int. Cl.: F03D 7/02, F03D 11/02

(54) **Windkraftanlage mit einer elektrischen Bremseinrichtung**

(30) Priorität: 07.11.2012 DE 102012220269
(71) Anmelder: Siemens Aktiengesellschaft, 80333 München (DE)
(72) Erfinder: Eichler, Bernhard, 94149 Kößlarn (DE); Kraus, Ludwig, 94099 Ruhstorf (DE); Niederhofer, Markus, 94081 Fürstenzell (DE); Schwimmbeck, Franz, 94099 Ruhstorf (DE)

(57) **Zusammenfassung**

Die Erfindung betrifft eine Windkraftanlage, insbesondere getriebelose Windkraftanlage, mit
- einer Windturbine (1), die einen Generator (2) antreibt,
- einen Umrichter (3), der eine Transformation der durch den Generator (2) erzeugten Spannung an eine vorgegebene Netzspannung anpasst,
- einer Turbinensteuerung (9),
- einer Widerstandsanordnung (5)mit Widerständen (6), elektrisch zwischen Generator (2) und Umrichter (3) angeordnet, die durch die Turbinensteuerung (9) oder separate Schutzeinrichtung bei Erreichen vorgegebener Grenzwerte zumindest eines Parameters, wie z.B. Überspannung, Drehzahl Windturbine (1) etc. zuschaltbar ist und so eine Bremsung der Windturbine herbeiführt.

## Beschreibung

Die Erfindung betrifft eine Windkraftanlage, insbesondere getriebelose Windkraftanlage, mit einer Windturbine, die einen Generator antreibt, einen Umrichter, der eine Transformation der durch den Generator erzeugten Spannung an eine vorgegebene Netzspannung anpasst, und einer Turbinensteuerung.

Windkraftanlagen, insbesondere getriebelose Windkraftanlagen weisen keine mechanischen Bremsen auf. Dies führt bei Lastabwurf, der beispielsweise durch einen Umrichterausfall in der Windkraftanlage oder einem Fehler im übergeordneten Netz aufgetreten ist, zu einem vergleichsweise raschen Anstieg der Drehzahl der Windturbine der Windkraftanlage. Erst nach einigen Sekunden wird über die Turbinensteuerung und den Pitch-Antrieb das Rotorblatt der Windturbine aus dem Wind gedreht.

Dieser Anstieg der Drehzahl kann bei starkem Wind oder Böen zu einer Drehzahlsteigerung bis in den unzulässigen Bereich der Windturbine führen. Der Pitch-Antrieb benötigt für die angestrebte Fahnenstellung der Rotorblätter ungefähr eine Zeit von 3 bis 10 Sekunden. Bei Windkraftanlagen mit Getriebe werden diese meist mechanisch gebremst.

Windkraftanlagen ohne Getriebe werden auf hohe maximale Drehzahlen ausgelegt, um den Pitch-Antrieb die Gelegenheit zu geben, die Rotorblätter zeitig in die Fahnenstellung zu fahren.

Ausgehend davon liegt der Erfindung die Aufgabe zugrunde, eine Windkraftanlage, insbesondere eine direkt angetriebene Windkraftanlage bereitzustellen, deren Windturbine, also die Rotorblätter auf eine vergleichsweise geringere maximale Drehzahl ausgelegt sein können und dennoch die Sicherheitsanforderungen bzgl. Anlagen- und Personenschutz erfüllt.

Die Lösung der gestellten Aufgabe gelingt durch eine Windkraftanlage, insbesondere getriebelose Windkraftanlage, mit
- einer Windturbine, die einen Generator antreibt,
- einen Umrichter, der eine Transformation der durch den Generator erzeugten Spannung an eine vorgegebene Netzspannung anpasst,
- einer Turbinensteuerung,
- einer Widerstandsanordnung mit Widerständen, elektrisch zwischen Generator und Umrichter angeordnet, die durch die Turbinensteuerung oder einer separaten Schutzeinrichtung bei Erreichen vorgegebener Grenzwerte zumindest eines Parameters, wie z.B. Überspannung, Drehzahl Windturbine etc. zuschaltbar ist und so eine Bremsung der Windturbine herbeiführt.

Die Lösung der gestellten Aufgabe gelingt auch durch ein Verfahren zur Bremsung einer Windkraftanlage, insbesondere getriebelosen Windkraftanlage, mit einer Windturbine, die einen Generator antreibt, einen Umrichter, der eine Transformation der durch den Generator erzeugten Spannung an eine vorgegebene Netzspannung anpasst, und einer Turbinensteuerung, durch folgende Schritte:
- Feststellen von einer oder mehrerer Grenzwertüberschreitung eingestellter Parameter durch eine Turbinensteuerung oder einer separaten Schutzeinrichtung,
- Ausgeben der Befehle an Schalter, die die Widerstände einer Widerstandsanordnung zuschalten, wodurch eine Bremsung der Windturbine eingeleitet wird

Die vorgegebenen Parameter, die bei Erreichen eines einstellbaren Grenzwertes die bei Erreichen dieser vorgebbaren Grenzwerte ein Zuschalten der einen Widerstandsanordnung durch die Turbinensteuerung ermöglichen, sind insbesondere Drehzahl der Windturbine als auch die Spannung auf der Generatorausgangsseite. Die Grenzwerte können dabei anlagenspezifisch vorgegeben sein.

Die Zuschaltung in der Widerstandsanordnung mit ihren speziell ausgelegten Widerständen, die auch für längere und oder mehrere Bremsungen geeignet sein müssen, erfolgt durch elektronische Schalter, wie z.B. Thyristoren oder IGBTs oder aber auch elektromechanisch über Schütze und/oder Leistungsschalter.

Die Spannungsebene auf der die Zuschaltung der Widerstandsordnung erfolgt, kann sowohl auf der Niederspannungs- als auch auf der Mittelspannungsebene stattfinden, d.h. auf Spannungsebenen von einigen hundert Volt bis zu einigen Kilovolt.

Über den gewählten Widerstandswert jedes einzelnen Widerstandes einer jeden Phase kann der benötigte Statorstrom festgelegt werden und damit das auftretende Gegenmoment definiert werden.

Es wird erfindungsgemäß durch die direkte Ansteuerung dieser elektronischen Bremse durch die Turbinensteuerung ein vom Umrichter unabhängiges redundantes Bremssystem geschaffen.

Vorteilhafterweise sind dabei nun insbesondere bei den getriebelosen Windkraftanlagen - Direct Drive - die Mechanik, insbesondere die Fliehkraftbeanspruchung der Rotorblätter nicht mehr an den theoretisch max. Drehzahlen der Windturbine auszurichten, sondern es sind lediglich die Nennbedingungen zu beherrschen. Für die außergewöhnlichen Betriebsfälle, also Betriebsfälle, die die Anlagensicherheit oder Personensicherheit in Frage stellen, wird nun die erfindungsgemäße Widerstandsanordnung eingesetzt.

In einer alternativen Ausführungsform kann die Notbremsung - bei Ausfall der Turbinensteuerung oder unabhängig von der Turbinensteuerung - direkt von den Sensorsystemen, also über eine sich selbst aktivierende Schutzeinrichtung eingeleitet werden. Dabei werden über Sensoren der Schutzeinrichtung die relevanten Parameter wie Spannungshöhe am Generatorausgang, Drehzahl der Windturbine etc. überwacht und bei Überschreiten vorgebbarer Grenzwerte die Notbremsung und/oder die Fahnenstellung der Rotorblätter eingeleitet.

Somit lassen sich auch die Rotorblätter günstiger und einfacher herstellen, oder es sind größere Rotorblätter möglich.

Die Erfindung sowie weitere vorteilhafte Ausgestaltungen der Erfindung sind den prinzipiell dargestellten Ausführungsbeispielen zu entnehmen. Darin zeigen:
- FIG 1: eine prinzipielle Darstellung einer Windkraftanlage,
- FIG 2: eine Ausführungsform einer Widerstandsanordnung mit elektronischem Schalter,
- FIG 3: eine Ausführungsform mit elektromechanischem Schalter der Widerstandsanordnung.

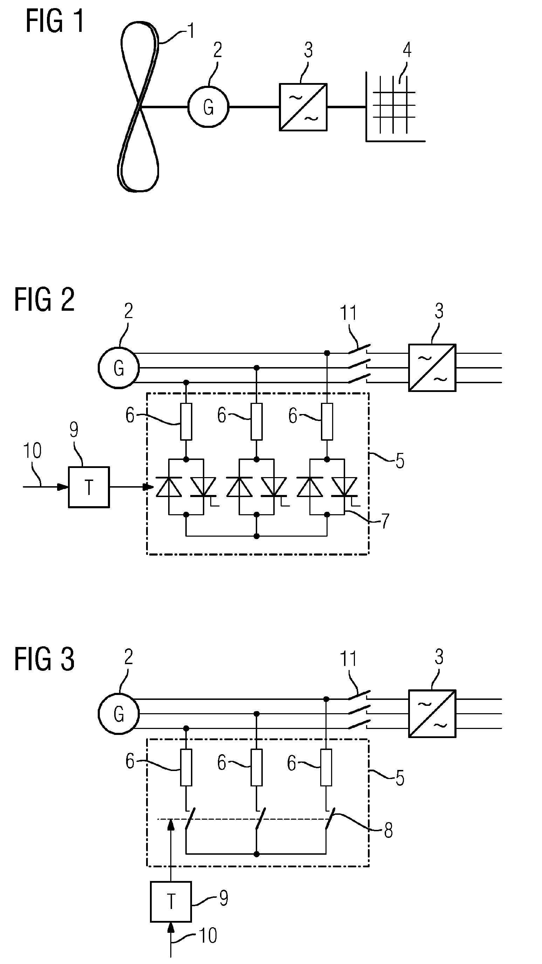

FIG 1 zeigt in einer Prinzipdarstellung eine Windturbine 1, die durch Drehung mittels eines Generators 2 elektrische Energie erzeugt, die durch einen Umrichter 3 an ein öffentliches Netz 4 weitergeleitet wird. Der Umrichter 3 passt die Netzparameter, wie z.B. Frequenz, Spannungshöhe an die des öffentlichen Netzes 4 an.

Auftreten von Starkwind oder Windböen, insbesondere bei gleichzeitigem Lastabwurf führt zu einer Drehzahlsteigung der Windturbine bis in den unzulässigen Bereich. Es kann gegebenenfalls durch mechanische Bremsen ein Gegenmoment aufgebracht werden, um diesen unzulässigen Bereich der Windturbine zu vermeiden. Bis jedoch eine Bremswirkung bei einem mechanischen Bremssystem wirkt, vergeht eine vergleichsweise lange Zeit - einige Sekunden.

Aus diesem Grund ist nun erfindungsgemäß, in den Abgang des Generators 2, also zwischen Generator 2 und einem Leistungsschalter 11, der elektrisch vor einem Umrichter 3 angeordnet ist, eine Widerstandsanordnung 5 vorgesehen, die bei Bedarf durch eine Turbinensteuerung 9 oder eine separate Schutzeinrichtung sofort zuschaltbar ist.

Als Eingangsgrößen 10 der Turbinensteuerung 9 dienen beispielsweise die Drehzahl der Windturbine oder die Spannung auf der Ausgangsseite des Generators 2. Die vorgegebenen Grenzwerte dabei werden anlagenspezifisch vorgegeben. Bei Erreichen eines oder mehrerer Grenzwerte wird gemäß FIG 2 über elektronische Schalter, wie z.B. Thyristoren 7 oder IGBTs die Widerstände 6 der Widerstandsanordnung 5 zugeschaltet.

In einer weiteren Ausführungsform gemäß FIG 3, wird über elektromechanische Schalter 8, wie z.B. Schütze oder Leistungsschalter die Widerstände 6 der Widerstandsanordnung 5 zugeschaltet.

Durch die prompte Zuschaltung (< 100ms) der Widerstände auf jede Phase, entsteht im Generator 2 ein Bremsmoment, das verhindert, dass die Windturbine 1 in einen unzulässigen Drehzahlbereich gerät. Im Vergleich zu einer mechanischen Bremse oder zu Antrieben der Pitch-Systeme wird somit Wesentlich schneller reagiert. Vorteilhafterweise sind dabei die Widerstände 6 der Widerstandsanordnung 5 in ihrer thermischen Auslegung so dimensioniert, dass während des Bremsvorganges und solange der vorgegebene Grenzwert in der Turbinensteuerung 9 ansteht, die Energie zumindest so lange aufgenommen werden kann, bis die Pitch-Antriebe die Rotorblätter der Windturbine 1 in eine unkritische Stellung "Fahnenstellung" gefahren haben.

Die Spannungsebene auf der die Zuschaltung der Widerstandsordnung 5 erfolgt, kann sowohl auf der Niederspannungs- als auch auf der Mittelspannungsebene stattfinden, d.h. auf Spannungsebenen von einigen hundert Volt bis zu einigen Kilovolt. Damit ist die erfinderische Bremseinrichtung für kleine und große Windkraftanlagen - also für den Leistungsbereich von einigen Kilowatt bis zu einigen Megawatt geeignet. Dementsprechend sind selbstverständlich die weiteren elektrischen Betriebsmittel wie die Widerstände 6, Thyristoren 7, IGBTs, Schalter oder Schütze 8 zu dimensionieren.

Über den jeweiligen Widerstandswert des einzelnen Widerstandes einer Phase kann der benötigte Statorstrom des Generators 2 dieser Phase festgelegt werden, über den das auftretende Gegenmoment definiert wird.

## Patentansprüche

1. Windkraftanlage, insbesondere getriebelose Windkraftanlage, mit
- einer Windturbine (1), die einen Generator (2) antreibt,
- einen Umrichter (3), der eine Transformation der durch den Generator (2) erzeugten Spannung an eine vorgegebene Netzspannung anpasst,
- einer Turbinensteuerung (9),
- einer Widerstandsanordnung (5) mit Widerständen (6), elektrisch zwischen Generator (2) und Umrichter (3) angeordnet, die durch die Turbinensteuerung (9) oder einer separaten Schutzeinrichtung bei Erreichen vorgegebener Grenzwerte zumindest eines Parameters, wie z.B. Überspannung, Drehzahl Windturbine (1) etc. zuschaltbar ist und so eine Bremsung der Windturbine herbeiführt.

2. Windkraftanlage nach Anspruch 1, **dadurch gekennzeichnet, dass** die Zuschaltung der Widerstandsanordnung (5) durch elektronische Schalter (7) erfolgt.

3. Windkraftanlage nach Anspruch 1, **dadurch gekennzeichnet, dass** die Zuschaltung der Widerstandsanordnung (5) durch elektromechanische Schalter (8) erfolgt.

4. Windkraftanlage nach einem der vorhergehenden Ansprüche, **dadurch gekennzeichnet, dass** der Generator (2) ein permanenterregter Synchronmotor ist.

5. Windkraftanlage nach einem der vorhergehenden Ansprüche, **dadurch gekennzeichnet, dass** durch die Turbinensteuerung (9) eine Überwachung der Drehzahl der Windturbine (1) und/oder der Spannung am Ausgang des Generators (2) erfolgt.

6. Verfahren zur Bremsung einer Windkraftanlage nach Anspruch 1 durch folgende Schritte:
- Feststellen von einer oder mehrerer Grenzwertüberschreitung eingestellter Parameter durch eine Turbinensteuerung 9 oder separate Schutzeinrichtung,
- Ausgeben der Befehle an Schalter (7,8), die Widerstände (6) einer Widerstandsanordnung (5) zuschalten, wodurch eine Bremsung der Windturbine eingeleitet wird.

7. Verfahren nach Anspruch 6, **dadurch gekennzeichnet, dass** die Turbinensteuerung (9) oder die Schutzeinrichtung gleichzeitig oder danach den Pitch-Antrieben den Befehl zukommen lässt, die Rotorblätter der Windturbine (1) in Fahnenstellung zu fahren.
